# EUROPEAN PATENT APPLICATION

(11) **EP 4 399 973 A1**
(43) Date of publication of application: **17.07.2024**
(21) Application number: 22867158.2
(22) Date of filing: 18.08.2022
(51) Int. Cl.: A01N 1/02

(54) **ORGAN STORAGE CONTAINER, ORGAN STORAGE DEVICE, AND PRODUCTION METHOD FOR ORGAN STORAGE CONTAINER**

(30) Priority: 08.09.2021 JP 2021145921; 03.06.2022 JP 2022090616
(71) Applicant: SCREEN Holdings Co., Ltd., Kyoto-shi, Kyoto 602-8585 (JP)
(72) Inventor: KASAMATSU Hiroo, Kyoto-shi, Kyoto 602-8585 (JP); TORAI Shinji, Kyoto-shi, Kyoto 602-8585 (JP); YOSHIMOTO Syuhei, Kyoto-shi, Kyoto 602-8585 (JP)
(74) Representative: Goddar, Heinz J.
(86) International application number: PCT/JP2022/031150
(87) International publication number: WO 2023/037836

(57) **Abstract**

An organ preservation container (1) is a container for preserving an organ ex vivo. The organ preservation container (1) includes a storage (20) that includes a main body (21) recessed downward, and a lid (30) that covers an opening at the top of the main body (21). The storage (20) and the lid (30) are each formed by vacuum forming. This achieves a compact and light-weight organ preservation container (1).

## Description

### [Technical Field]

The present invention relates to an organ preservation container for preserving an organ ex vivo and a method of manufacturing an organ preservation container.

### [Background Art]

In organ transplant operations such as liver transplantation, after an organ is removed from the donor, the organ is subjected to flushing for cleaning blood vessels in the organ and is then contained in an organ preservation container and transported until the organ is transplanted into the recipient. When the flushing is performed on the organ removed from the donor, tubes are connected to the organ. Then, liquids are supplied into blood vessels in the organ through the tubes. This allows the blood in the organ to be drained. Other processing may also be performed in the organ preservation container during transport, such as cooling preservation in which the organ is immersed in a cooled preservation solution, or perfusion treatment in which blood vessels in the organ are perfused with a liquid such as physiological saline.

For example, Patent Literature (PTL) 1 discloses a conventional device for preserving an organ removed from the donor ex vivo.

### [Citation List]

### [Patent Literature]

PTL 1: Japanese Patent Application Laid-Open No. 2020-90539

### [Summary of Invention]

### [Technical Problem]

The organ preservation container (organ chamber assembly) for containing an organ according to PTL 1 has a complicated structure in which the lid and the bottom are composed of layers of members. Thus, the organ preservation container is large in size and expensive.

It is, however, desirable that the organ preservation container be compact and light in weight in order to place the organ preservation container around the site of operation when an organ is removed from the donor. It is further desirable that the organ preservation container be disposable and low priced in view of application purposes.

The present invention has been made in light of such circumstances, and it is an object of the present invention to provide a light-weight organ preservation container.

### [Solution to Problem]

To solve the problem described above, a first aspect of the present application is an organ preservation container for preserving an organ ex vivo. The organ preservation container includes a storage including a main body recessed downward, and a lid that covers an opening at a top of the main body. The storage and the lid are each formed by vacuum forming.

A second aspect of the present application is the organ preservation container according to the first aspect, in which the storage includes the main body recessed downward from a ring-shaped upper edge and a first edge portion provided around the upper edge, the lid includes a cover portion that covers an opening at the top of the main body and a second edge portion provided around the cover portion, and the first edge portion and the second edge portion are fittable to each other.

A third aspect of the present application is the organ preservation container according to the second aspect, in which the first edge portion includes a first ring-shaped portion expanding radially outward from the upper edge of the main body, a first cylindrical portion extending upward from an outer peripheral edge of the first ring-shaped portion, and a second ring-shaped portion expanding radially outward from an upper end of the first cylindrical portion, the second edge portion includes a third ring-shaped portion expanding radially, a second cylindrical portion extending upward from an outer peripheral edge of the third ring-shaped portion, and a fourth ring-shaped portion expanding radially outward from an upper end of the second cylindrical portion, and when the first edge portion and the second edge portion are fitted to each other, a ring-shaped contact surface is formed by at least one set of opposite surfaces from among a set of an upper surface of the first ring-shaped portion and a lower surface of the third ring-shaped portion, a set of an inner peripheral surface of the first cylindrical portion and an outer peripheral surface of the second cylindrical portion, and a set of an upper surface of the second ring-shaped portion and a lower surface of the fourth ring-shaped portion.

A fourth aspect of the present application is the organ preservation container according to any one of the first to third aspects, in which each part of the storage and the lid has a plate-like shape having a thickness of less than or equal to 5 mm.

A fifth aspect of the present application is the organ preservation container according to any one of the first to fourth aspects, in which the storage has a lower surface having a plurality of protrusions.

A sixth aspect of the present application is the organ preservation container according to any one of the first to fifth aspects that further includes at least one connector attached to either the storage or the lid, the one connector providing communication between the inside and outside of the organ preservation container.

A seventh aspect of the present application is an organ preservation device for preserving an organ ex vivo. The organ preservation device includes the organ preservation container according to the sixth aspect, and a liquid supplier that supplies a liquid to the organ. The connector includes a first connector whose outer end is connected to the liquid supplier and whose inner end is connected to a catheter.

An eighth aspect of the present application is the organ preservation device according to the seventh aspect that further includes a drainage collector that collects a liquid drained from the organ. The organ preservation container includes a plurality of the connectors, and the connectors include a second connector whose outer end is connected to the drainage collector.

A ninth aspect of the present application is an organ preservation device for preserving an organ ex vivo. The organ preservation device includes the organ preservation container according to the sixth aspect, a pressure regulator that regulates a pressure in the organ preservation container at a pressure lower than atmospheric pressure, and the connector includes a third connector that is connected to the pressure regulator.

A tenth aspect of the present application is a method of manufacturing an organ preservation container for preserving an organ ex vivo. The organ preservation container includes a storage including a main body recessed downward, and a lid that covers an opening at a top of the main body. A process of manufacturing the storage and a process of manufacturing the lid each includes the steps of a) heating and plasticizing a sheet resin, b) placing the resin plasticized on a mold and molding the resin by vacuum aspiration from inside the mold, c) cooling and hardening the resin, d) releasing the resin from the mold, and e) trimming the resin.

An eleventh aspect of the present application is the method of manufacturing the organ preservation container according to the tenth aspect, in which in the process of manufacturing the storage, a surface that is in contact with the mold becomes a lower surface of the storage.

### [Advantageous Effects of Invention]

According to the first to eleventh aspects of the present application, it is possible to achieve a compact and light-weight organ preservation container.

In particular, according to the second aspect of the present application, there is no need for other components for fixation. Accordingly, it is possible to reduce costs for fixing components and to suppress an increase in the weight of the organ preservation container as a whole.

In particular, according to the third aspect of the present application, it is possible to seal up the organ preservation container. This prevents leakage of the liquid contained in the organ preservation container.

In particular, according to the fifth to eleventh aspects of the present application, the protrusions or suction marks made by vacuum forming do not come in contact with the organ contained in the interior. Accordingly, it is possible to reduce the load on the organ, which may be placed when the protrusions come in contact with the organ.

In particular, according to the sixth aspect of the present application, it is possible to supply and discharge liquid or gas to and from the outside via the connectors while sealing up the interior of the organ preservation container.

In particular, according to the seventh aspect of the present application, it is possible to supply the liquid to the organ contained in the organ preservation container via the connectors while sealing up the interior of the organ preservation container. This allows the organ to be subjected to perfusion preservation while remaining contained in the organ preservation container.

In particular, according to the eighth aspect of the present application, it is possible to discharge the liquid drained from the organ contained in the organ preservation container to the outside via the connectors while sealing up the interior of the organ preservation container. This allows the organ to be subjected to long-duration perfusion preservation while remaining contained in the organ preservation container.

In particular, according to the ninth aspect of the present application, it is possible to provide communication between the interior of the organ preservation container and the pressure regulator via the connectors while sealing up the interior of the organ preservation container. This enables adjusting the pressure in the organ preservation container while sealing up the interior of the organ preservation container.

### [Brief Description of Drawings]

Fig. 1 is a longitudinal sectional view of an organ preservation container according to a first embodiment.
Fig. 2 is a top view of a storage of the organ preservation container according to the first embodiment.
Fig. 3 is a top view of a lid of the organ preservation container according to the first embodiment.
Fig. 4 shows a photograph depicting that a liver is contained in the storage of the organ preservation container according the first embodiment.
Fig. 5 shows a photograph depicting that a liver is contained in the organ preservation container according to the first embodiment.
Fig. 6 shows a photograph depicting that a liver is contained in the organ preservation container according to the first embodiment.
Fig. 7 is flowchart showing the procedure for the process of manufacturing the organ preservation container according to the first embodiment.
Fig. 8 is a schematic view showing the process of manufacturing the organ preservation container according to the first embodiment.
Fig. 9 is a schematic view showing the process of manufacturing the organ preservation container according to the first embodiment.
Fig. 10 is a schematic view showing the process of manufacturing the organ preservation container according to the first embodiment.
Fig. 11 is a schematic view showing the process of manufacturing the organ preservation container according to the first embodiment.
Fig. 12 is a flowchart showing the procedure for an organ transplant operation according to the first embodiment.
Fig. 13 is a longitudinal sectional view of an organ preservation container according to a second embodiment.
Fig. 14 is a flowchart showing the procedure for the process of manufacturing the organ preservation container according to the second embodiment.
Fig. 15 is a flowchart showing the procedure for an organ transplant operation according to the second embodiment.

### [Description of Embodiment]

Hereinafter, embodiments of the present invention will be described with reference to the drawings.

In the present application, the "donor" and the "recipient" may be humans, or may be non-human animals. That is, "organs" according to the present application may be human organs, or may be organs of non-human animals. The non-human animals may be rodents such as mice and rats, ungulates such as pigs, goats, and sheep, non-human primates such as chimpanzees, or other non-human mammals, or may be non-mammalian animals.

### 1. First Embodiment

### 1-1. Configuration of Organ Preservation Container

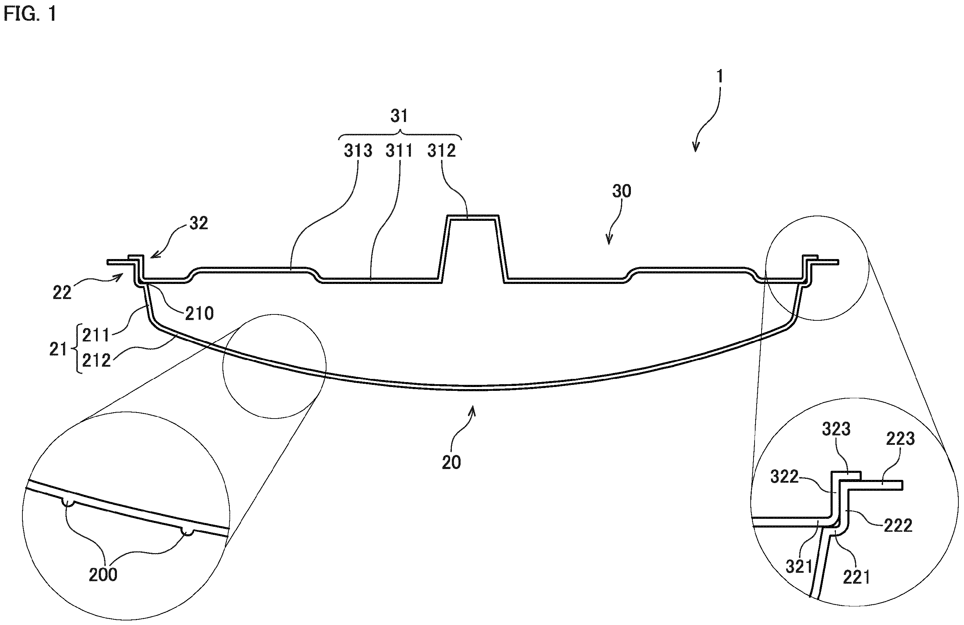

Fig. 1 is a longitudinal sectional view of an organ preservation container 1 according to a first embodiment of the present invention. The organ preservation container 1 is a container for use in an organ transplant operation and for temporarily preserving an organ removed from the donor ex vivo until the organ is transplanted into the recipient. Examples of the organ to be preserved in the organ preservation container 1 include a liver, a kidney, a heart, and a pancreas. It is, however, noted that the organ to be preserved in the organ preservation container 1 may be any organ other than the aforementioned organs, or may be part of any organ.

As shown in Fig. 1, the organ preservation container 1 according to the present embodiment includes a storage 20 and a lid 30. The storage 20 and the lid 30 are each formed by vacuum forming. Each part of the storage 20 and the lid 30 has a thickness of 5 mm or less. The organ preservation container 1 includes no components other than the storage 20 and the lid 30. Thus, the organ preservation container 1 is more compact and lighter in weight than conventional massive organ preservation containers.

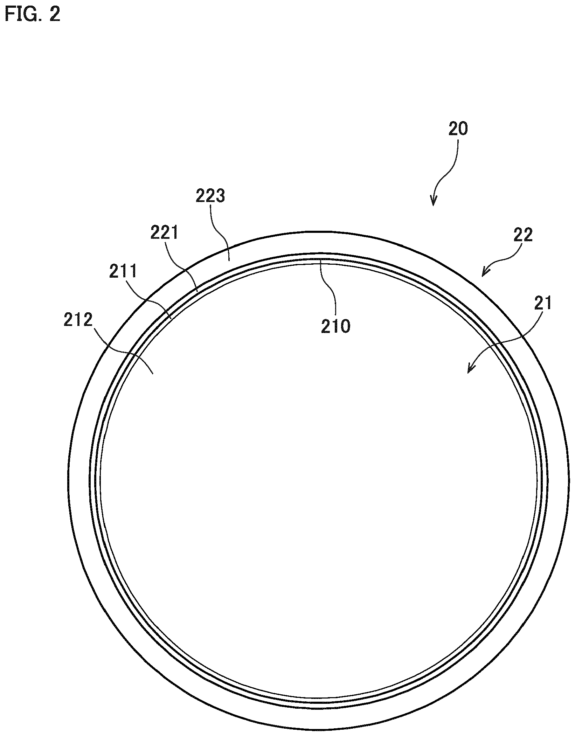

The storage 20 contains the removed organ and a liquid such as a preservation solution. Fig. 2 is a top view of the storage 20. As shown in Figs. 1 and 2, the storage 20 includes a main body 21 and a first edge portion 22.

The main body 21 is a cup-shaped portion recessed downward from a ring-shaped upper edge 210. In the present embodiment, the main body 21 includes a circular truncated cone-shaped side wall 211 that shuts downward from the circular ring-shaped upper edge 210, and a curved bottom 212 that protrudes downward from the lower end portion of the side wall 211.

The first edge portion 22 is a ring-shaped portion provided around the upper edge 210 of the main body 21. The first edge portion 22 includes a first ring-shaped portion 221, a first cylindrical portion 222, and a second ring-shaped portion 223. The first ring-shaped portion 221 is a circular ring-shaped portion that expands radially outward from the upper edge 210 of the main body 21. The first cylindrical portion 222 is a cylindrical portion that extends upward from the outer peripheral edge of the first ring-shaped portion 221. The second ring-shaped portion 223 is a circular ring-shaped portion that expands radially outward from the upper end of the first cylindrical portion 222. Note that the joint between the first ring-shaped portion 221 and the first cylindrical portion 222 forms a smooth curved surface.

When the storage 20 is molded, the lower surface and the outer peripheral surface of the storage 20 come in contact with a mold. Thus, as shown in enlarged dimensions in Fig. 1, a plurality of protrusions 200a are formed as suction marks on the lower surface and the outer peripheral surface of the storage 20. If these protrusions 200 are formed on the upper surface and the inner peripheral surface, the protrusions 200 may come in contact with the organ contained in the storage 20 and put the load on the organ. Since the protrusions 200 are formed on the lower surface and the outer peripheral surface in this way, it is possible to prevent the application of load on the organ, which may be caused by the protrusions 200 formed by vacuum forming.

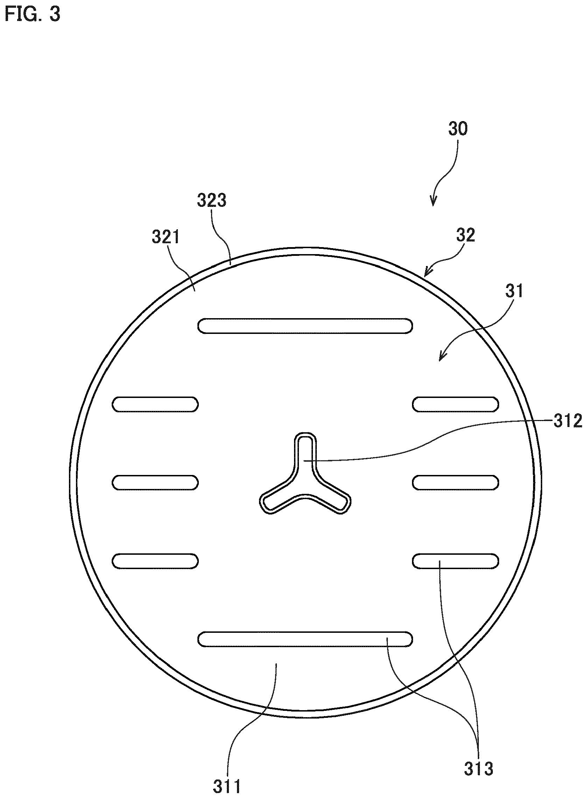

The lid 30 covers an opening at the top of the main body 21 of the storage 20. Fig. 3 is a top view of the lid 30. As shown in Figs. 1 and 3, the lid 30 includes a cover portion 31 and a second edge portion 32.

The cover portion 31 is a portion that covers the opening at the top of the main body 21 of the storage 20. The cover portion 31 includes a disk portion 311, a gripper 312, and ribs 313. The disk portion 311 is a disk-like portion that expands into a flat. The gripper 312 and the ribs 313 are formed by part of the disk portion 311 protruding upward. The gripper 312 is a portion to be grasped by an operator when carrying the lid 30. The gripper 312 is provided in the center of the disk portion 311 and protrudes upward from the disk portion 311. The gripper 312 has a Y-letter shape extending in three directions from the center when viewed from above. The ribs 313 protrude upward from the disk portion 311 and extend in a specific direction along the upper surface of the disk portion 311. The height of the ribs 313 is lower than the height of the gripper 312. The ribs 313 provided on the flat lid 30 improve the strength of the cover portion 31.

The second edge portion 32 is a ring-shaped portion provided around the cover portion 31. The second edge portion 32 includes a third ring-shaped portion 321, a second cylindrical portion 322, and a fourth ring-shaped portion 323. The third ring-shaped portion 321 is a circular ring-shaped portion that expands in the radial direction. In the present embodiment, the outer edge portion of the cover portion 31 functions as the third ring-shaped portion 321. The second cylindrical portion 322 is a cylindrical portion that extends upward from the outer peripheral edge of the third ring-shaped portion 321. The fourth ring-shaped portion 323 is a circular ring-shaped portion that expands radially outward from the upper end of the second cylindrical portion 322. Note that the joint between the third ring-shaped portion 321 and the second cylindrical portion 322 forms a smooth curved surface.

The first edge portion 22 and the second edge portion 32 are fittable to each other. That is, the storage 20 and the lid 30 are fixedly attached to each other by fitting the first edge portion 22 and the second edge portion 32 to each other. In this way, since the storage 20 and the lid 30 are fixedly attached to each other by fitting, there is no need for other components for fixation. It is thus possible to reduce costs for fixing components and to suppress an increase in the weight of the organ preservation container 1 as a whole.

Specifically, when the first edge portion 22 and the second edge portion 32 are fitted to each other, the upper surface of the first ring-shaped portion 221 and the lower surface of the third ring-shaped portion 321 face each other, the inner peripheral surface of the first cylindrical portion 222 and the outer peripheral surface of the second cylindrical portion 322 face each other, and the upper surface of the second ring-shaped portion 223 and the lower surface of the fourth ring-shaped portion 323 face each other. And, a ring-shaped contact surface is formed by at least one set of opposite surfaces from among the three sets of opposite surfaces, including the upper surface of the first ring-shaped portion 221 and the lower surface of the third ring-shaped portion 321, the inner peripheral surface of the first cylindrical portion 222 and the outer peripheral surface of the second cylindrical portion 322, and the upper surface of the second ring-shaped portion 223 and the lower surface of the fourth ring-shaped portion 323. Thus, when the first edge portion 22 and the second edge portion 32 are fitted to each other, the storage 20 and the lid 30 are capable of sealing up the interior of the organ preservation container 1. This prevents leakage of the liquid contained in the organ preservation container 1 from the fit between the first edge portion 22 and the second edge portion 32.

In the present embodiment, when the first edge portion 22 and the second edge portion 32 are fitted to each other, the second cylindrical portion 322 is press-fitted into the first cylindrical portion 222. Thus, at the time of fitting, at least the inner peripheral surface of the first cylindrical portion 222 and the outer peripheral surface of the second cylindrical portion 322 form a ring-shaped contact surface from among the three sets of opposite surfaces..

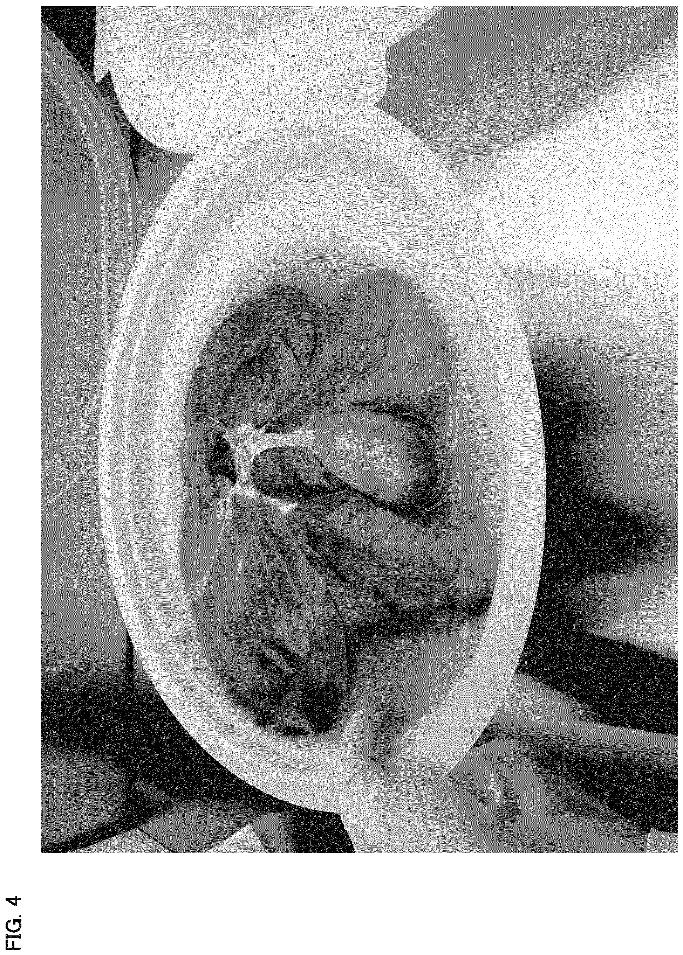

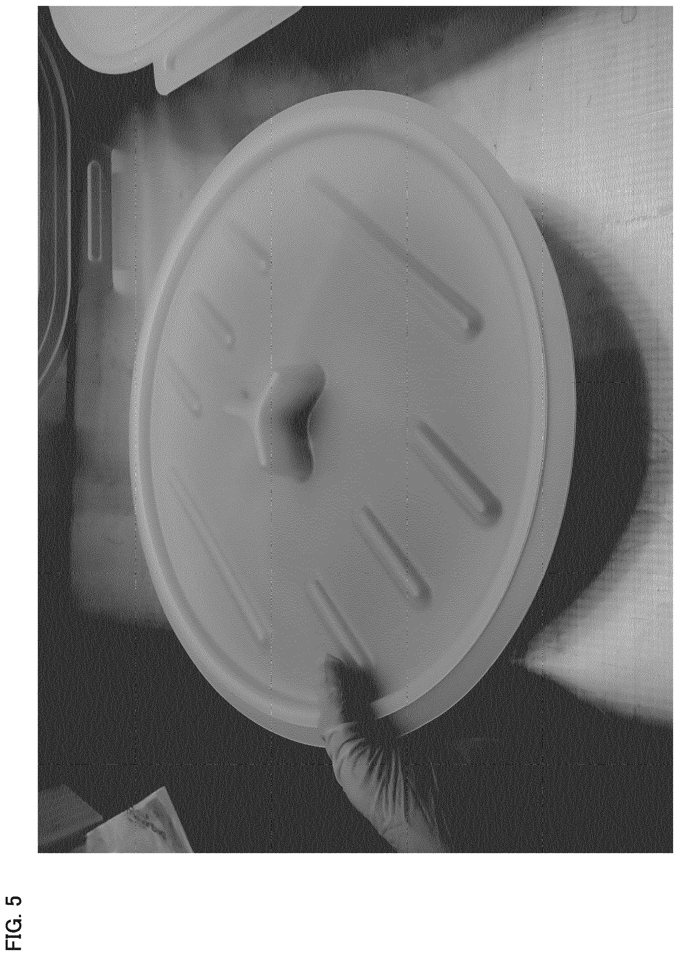

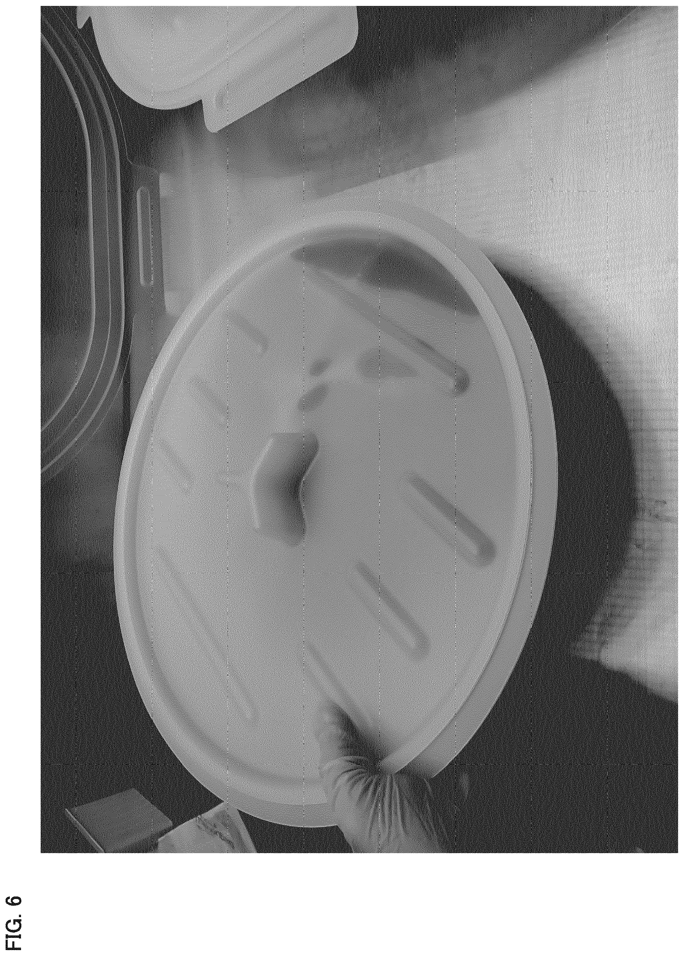

Fig. 4 shows a photograph depicting that the liver of a pig and a liquid are contained in the storage 20 of the organ preservation container 1. Figs. 5 and 6 are photographs depicting that the liver of a pig and a liquid are contained in the organ preservation container 1. In Figs. 5 and 6, the lid 30 is fitted to the storage 20, and the organ preservation container 1 is sealed up.

In the present embodiment, the outer diameter of the main body 21 of the storage 20 (i.e., the diameter of the upper edge 210) is approximately 310 mm The height of the main body 21 is approximately 50 mm. Thus, as shown in Fig. 4, the main body 21 has a size suitable for containing the liver of a pig. Since the liver of a pig and the liver of a human being are similar in size, the size of the organ preservation container 1 is also suitable for containing the liver of a human being.

Fig. 5 shows that the organ preservation container 1 that contains the liver of a pig and a liquid is held in a horizontal position. Meanwhile, Fig. 6 shows that the organ preservation container 1 that contains the liver of a pig and a liquid is tilted so that the liquid contained therein is in contact with the lid 30. As shown in Fig. 6, even if the liquid contained inside comes in contact with the fit between the storage 20 and the lid 30, the inside liquid does not leak out. That is, this indicates that the fit between the storage 20 and the lid 30 seals up the organ preservation container 1.

### 1-2. Process of Manufacturing Organ Preservation Container

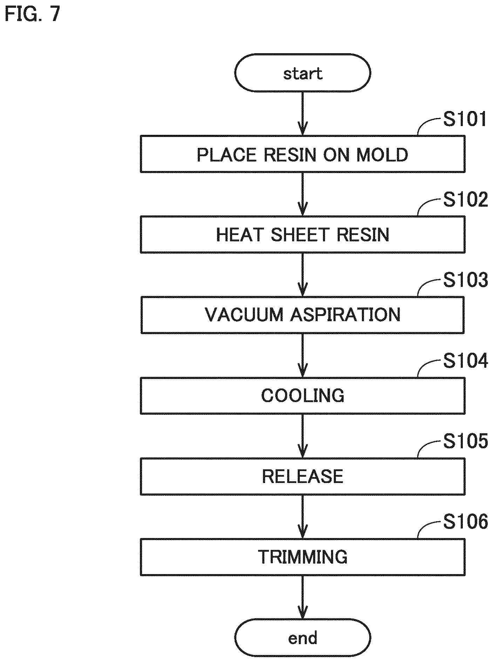

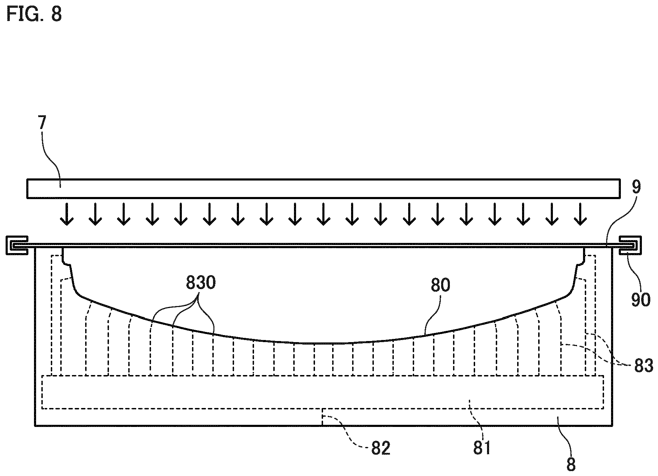

Next, the procedure for the process of manufacturing the organ preservation container 1 will be described with reference to Figs. 7 to 11. Fig. 7 is a flowchart showing the procedure for the process of manufacturing each of the storage 20 and the lid 30 of the organ preservation container 1. Figs. 8 to 11 are schematic views showing the process of manufacturing the storage 20. The process of manufacturing the storage 20 is described below. The process of manufacturing the lid 30 is almost the same as the process of manufacturing the storage 20, and therefore a description thereof shall be omitted.

As shown in Fig. 8, in the manufacture of the storage 20, firstly, a sheet resin 9 is prepared as a material and placed on a mold 8 (step S101). At this time, the edge of the resin 9 is held by a material holding mechanism 90. Then, the resin is heated by a heater 7 and plasticized (step S102). For example, the heater 7 may be retracted upward after the heat treatment.

Note that the resin 9 may be heated and plasticized before placed on the mold 8, and thereafter the plasticized resin 9 may be placed on the mold 8. That is, step S102 maya be performed before step S101. In that case, it is preferable that the heating of the resin material may be conducted in the vicinity of the mold in order to suppress deformation of the plasticized resin.

The mold 8 has a molding face 80 on the surface in order to mold the surface shape of the storage 20. The mold 8 includes therein a pressure regulating chamber 81, a common suction passage 82, and a plurality of individual suction passages 83. The pressure regulating chamber 81 is a space provided inside the mold 8. The common suction passage 82 is a passage that connects the pressure regulating chamber 81 and a pressure regulating mechanism (not shown). The individual suction passages 83 are passages that connect the pressure regulating chamber 81 and a plurality of vacuum holes 830 provided in the molding face 80, respectively.

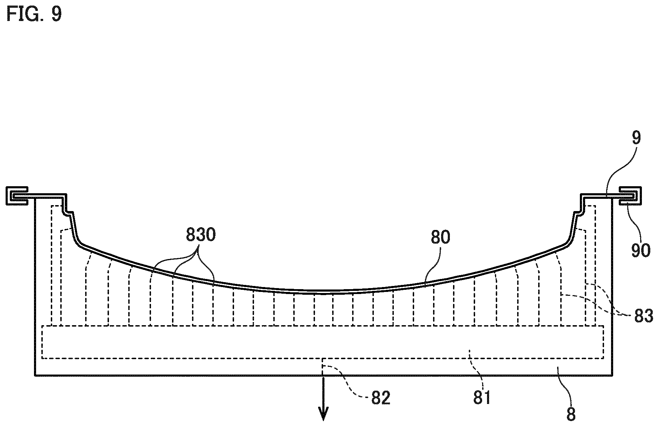

Then, the resin is molded by vacuum aspiration from the inside of the mold as shown in Fig. 9 (step S103). Specifically, the pressure regulating mechanism aspirates the gas in the pressure regulating chamber 81 through the common suction passage 82 so as to reduce the pressure in the pressure regulating chamber 81. Accordingly, the gas between the resin 9 and the molding face 80 of the mold 8 is aspirated through the vacuum holes 830 provided in the molding face 80. As a result, the resin 9 is sticked by aspiration to the molding face 80 and has a shape along the molding face 80. At this time, so-called plug-assist forming may be employed, in which the resin 9 is pressed against the mold 8 by using a member called a plug.

At this time, the side of the mold 8 becomes the lower surface side of the storage 20. Thus, the protrusions 200, which are the marks of the vacuum holes 830, are formed on the lower surface and the outer peripheral surface of the storage 20. This reduces the load on the organ resulting from the protrusions 200 because the protrusions 200 do not come in contact with the organ when the organ is contained in the storage 20. Besides, the protrusions 200 are not formed on the side of the first edge portion 22 that faces the second edge portion 32. This avoids the occurrence of a situation in which the protrusions 200 may generate clearance between the first edge portion 22 and the second edge portion 32 and prevent the organ preservation container 1 from being sealed up when the first edge portion 22 and the second edge portion 32 are fitted to each other.

Note that at the time of molding the lid 30, the mold side becomes the upper surface side of the lid 30. Accordingly, protrusions (not shown) or marks of the vacuum holes are formed on the upper surface and the inner peripheral surface side of the lid 30. Thus, when the organ is contained in the storage 20 and the lid 30 is fitted to the storage 20, the protrusions do not come in contact with organ even if he organ preservation container 1 is tilted and the organ comes in contact with the lower surface of the lid 30. Besides, the protrusions are not formed on the side of the second edge portion 32 that faces the first edge portion 22. This avoids the occurrence of a situation in which the protrusions may generate clearance between the first edge portion 22 and the second edge portion 32 and prevent the organ preservation container 1 from being sealed up when the first edge portion 22 and the second edge portion 32 are fitted to each other.

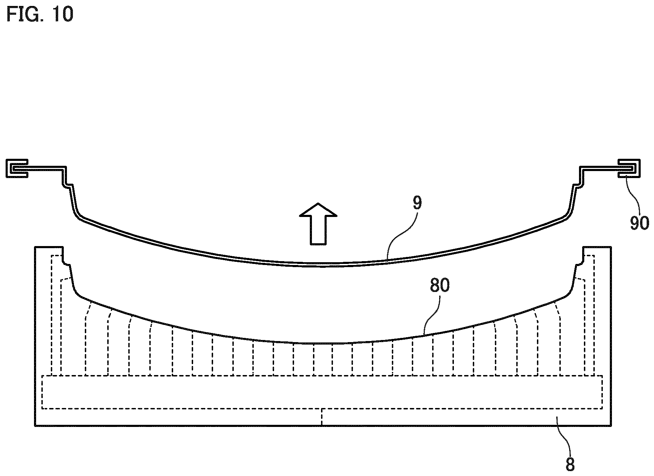

Following step S103, the molded resin 9 is cooled and hardened on the mold 8 (step S104). At this time, for example, the resin 9 may be cooled by blowing cold air from the opposite side to the mold 8. After the resin 9 is hardened, the material holding mechanism 90 is moved in a direction away from the mold so as to release the molded resin 9 from the mold 8 as shown in Fig. 10 (step S105). At this time, the pressure regulating mechanism may accelerate the release by raising the pressure in the pressure regulating chamber 81 through the common suction passage 82 to cause gas exhaustion from the vacuum holes 830

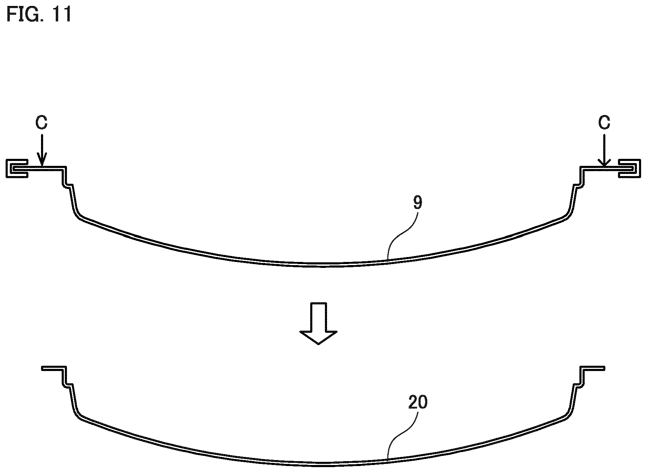

Eventually, the released resin 9 is trimmed, and unnecessary portions around the resin are removed as shown in Fig. 11 (step S106). In the example shown in Fig. 11, the resin 9 is trimmed at a circular ring-shaped cut-off position C to obtain the storage 20.

Through the aforementioned process, the storage 20 is formed by vacuum forming The lid 30 is also formed in the same manner. In this way, the use of vacuum forming achieves low-cost and large-volume production of the storage 20 and lid 30 having small thicknesses. Accordingly, the load is small even if the organ preservation container 1 is used as a disposable container.

### 1-3. Procedure for Organ Transplant Operation

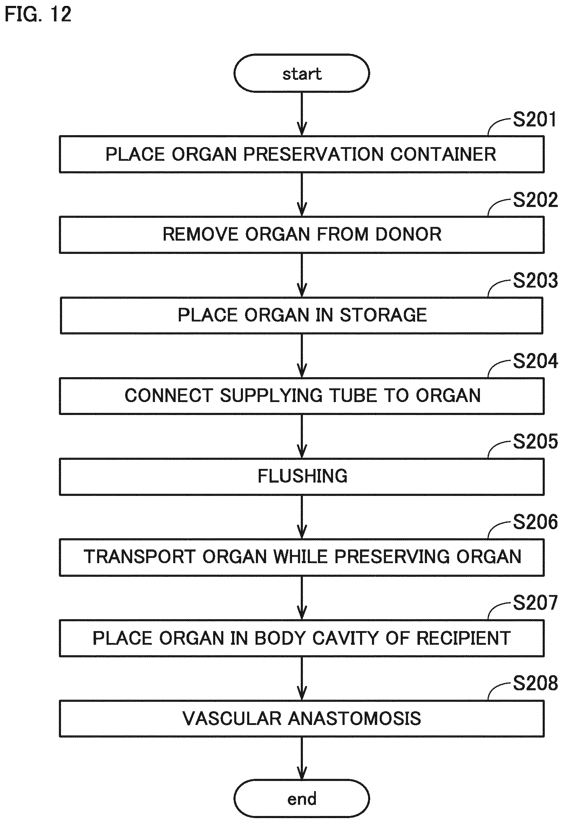

Next, the procedure for an organ transplant operation using the aforementioned organ preservation container 1 will be described with reference to Fig. 12. Fig. 12 is a flowchart showing the procedure for the organ transplant operation. In the following description, operators who work on the organ transplant operation are referred to as "operators." The operators include doctors acting as surgery operators and nurses who assist the doctors. The following description is given of a case in which an organ is transported while being preserved by simple cooling preservation.

In the organ transplant operation, an operator prepares the organ preservation container 1 in advance. Specifically, the storage 20 of the organ preservation container 1 is placed around the site of operation (step S201).

When the preparation for the organ preservation container 1 has completed, an operator removes the organ from the donor (step S202). Specifically, the operator dissects the abdominal part of the donor and cuts an artery and a vein extending from the organ in the body cavity of the donor. Then, the operator holds and takes out the organ from the inside of the body cavity of the donor with both hands and places the organ in the storage 20 of the organ preservation container 1 (step S203).

Thereafter, the operator inserts a supplying tube into the artery of the organ and a drain tube into the vein of the organ (step S204). The supplying tube is connected to a reservoir in which a liquid such as physiological saline is stored. The drain tube is connected to, for example, a drainage collection tank. At this time, the drain tube may not be connected to the organ in order to allow the drainage to be discharged naturally into the storage 20. In the case where there are a plurality of blood vessels connected into the organ, a plurality of supplying tubes may be connected to the organ. For example, in the case where the organ is a liver, two supplying tubes may be connected to the hepatic artery and the portal vein.

After each tube is connected to the organ, the operator performs flushing for cleaning the blood vessels in the organ (step S205). Specifically, the operator opens a clamp provided on the pathway of the supplying tube. This allows the liquid to be supplied from a reservoir through the supplying tube into the blood vessels in the organ. The liquid is circulated through the organ and drained from the vein. In the case where the drain tube is connected to the vein, the drained liquid flows through the drain tube toward the drainage collection tank. Through the flushing, blood clots or waste products are washed away from the blood vessels in the organ. Thereafter, each tube is disconnected from the blood vessel in the organ.

Then, the operator transports the organ preservation container 1 containing the organ to the recipient while preserving the organ by simple cooling preservation (step S206). In the case of simple cooling preservation, a low-temperature (e.g., 4°C) liquid such as physiological saline is stored in the storage 20 and the organ is immersed in that liquid. Then, the organ preservation container 1 is sealed up by the lid 30 and is transported.

When the organ has arrived at the recipient, an operator takes out the organ from the organ preservation container 1 and places the organ in the body cavity of the recipient (step S207). Then, the operator anastomoses the artery of the organ to an artery of the recipient and anastomoses the vein of the organ to a vein of the recipient (step S208). Thereafter, the operator closes the abdomen of the recipient.

As described above, the use of the organ preservation container 1 makes it possible to handle the organ within the organ preservation container 1 for a duration of time from immediately after the removal from the donor to immediately before the transplantation into the recipient through flushing and transport.

In the case of using a conventional large complicated organ preservation container, it is difficult to place the organ preservation container around the site of operation of the donor, and the organ is contained in another container such as a resin bag (isolation bag) for a duration of time from immediately after the removal from the donor to the completion of flushing. In that case, the organ needs to be dislocated twice before transport, once for dislocating the removed organ to the bag, and once for dislocating the organ from the bag to the organ preservation container. In the case of dislocating the organ, the body temperature of an operator may be transmitted to the organ, or physical load may be placed on the organ. Thus, it is preferable that the number of times the organ is dislocated is as small as possible. As described above, the use of the organ preservation container 1 allows the organ to be handled within the organ preservation container 1 for a duration of time from immediately after the removal from the donor to immediately before the transplantation into the recipient through flushing and transport. Accordingly, it is possible to reduce the load on the organ.

### 2. Second Embodiment

### 2-1. Configuration of Organ Preservation Device

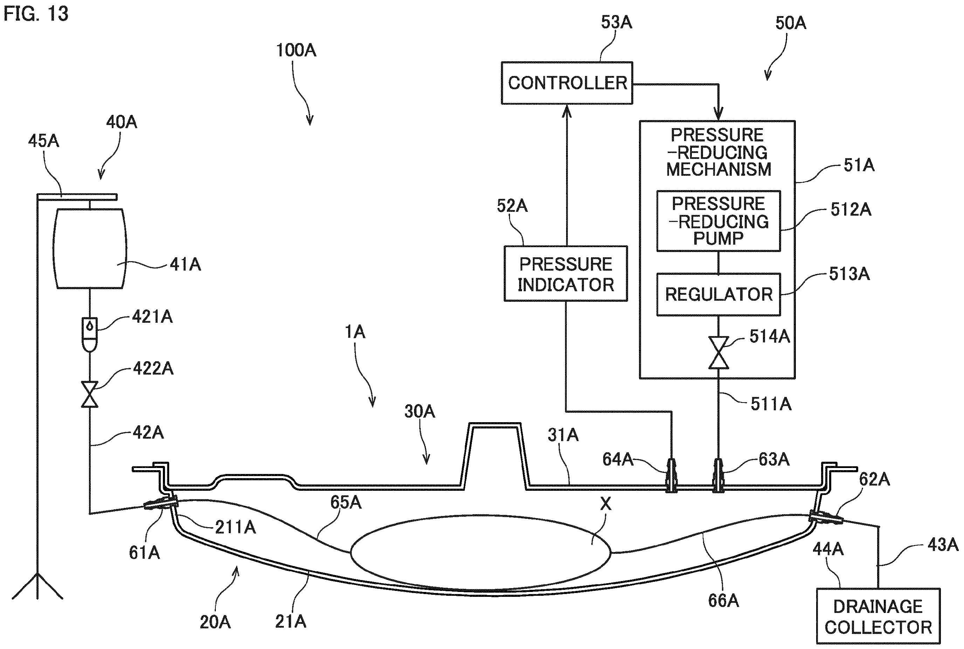

Fig. 13 is a diagram showing a configuration of an organ preservation device 100A that includes an organ preservation container 1A according to a second embodiment of the present invention. The organ preservation device 100A is a device for temporarily preserving an organ X removed from the donor ex vivo until the organ is transplanted into the recipient. In the organ preservation device 100A, perfusion is performed while atmospheric pressure around an organ contained in the organ preservation container 1A is maintained at a negative pressure lower than the atmospheric pressure. This reduces the load on the organ and allows smooth supply of a liquid to blood vessels in the organ.

As shown in Fig. 13, the organ preservation device 100A includes the organ preservation container 1A, a liquid supplier 40A, and a pressure regulator 50A.

The organ preservation container 1Ais a container for use in a transplant operation for an organ X and for temporarily preserving the organ X removed from the donor ex vivo until the organ X is transplanted into the recipient.

The organ preservation container 1A includes a storage 20A and a lid 30A. The storage 20A and the lid 30A are each formed by vacuum forming. Each part of the storage 20A and the lid 30A has a thickness of 5 mm or less. The organ preservation container 1A includes no components other than the storage 20A and the lid 30A. Thus, the organ preservation container 1A is more compact and lighter in weight than conventional massive organ preservation containers.

The organ preservation container 1A is manufactured by attaching a plurality of connectors 61A, 62A, 63A, and 64A to the organ preservation container 1 according to the first embodiment. The connectors 61A, 62A, 63A, and 64A are joint members that enable attachment of tubes from the inside and outside of the organ preservation container 1A. Each of the connectors 61A, 62A, 63A, and 64A has a cylindrical passage therein. Thus, when tubes are attached from inside or outside of the connectors 61A, 62A, 63A, and 64A, communicable connection is provided between tubes arranged inside the organ preservation container 1A and tubes arranged outside the organ preservation container 1A.

In the present embodiment, the four connectors 61A to 64A are attached to the organ preservation container 1A. Specifically, the four connectors 61A, 62A, 63A, and 64A include a first connector 61A and a second connector 62A that are connected to the liquid supplier 40A, and a third connector 63A and a fourth connector 64A that are connected to the pressure regulator 50A.

Each of the four connectors 61A, 62A, 63A, and 64A is attached to the organ preservation container 1 so as to penetrate therethrough and provides communication between the inside and outside of the organ preservation container 1. Thus, liquid or gas can be supplied to or discharged from the outside of the organ preservation container 1A through the connectors 61A, 62A, 63A, and 64A while the interior of the organ preservation container 1A is sealed up.

The storage 20A is attached to the first connector 61A and the second connector 62A. Specifically, each of the first connector 61A and the second connector 62A is attached to the storage 20A so as to penetrate a side wall 211A of a main body 21A of the storage 20A. The lid 30A is attached to the third connector 63A and the fourth connector 64A. Specifically, each of the third connector 63A and the fourth connector 64A is attached to the lid 30A so as to vertically penetrate a cover portion 31A of the lid 30A.

The first connector 61A has an inner end connected to one end of a first catheter 65A. The other end of the first catheter 65A is connected to an inflow blood vessel (e.g., artery) of the organ X contained in the organ preservation container 1A. The second connector 62A has an inner end connected to one end of a second catheter 66A. The other end of the second catheter 66A is connected to an outflow blood vessel (e.g., vein) of the organ X contained inside the organ preservation container 1A.

The liquid supplier 40A supplies a preservation solution such as physiological saline to the organ X. The liquid supplier 40A includes a liquid reservoir 41A, a supplying tube 42A, a drain tube 43A, and a drainage collector 44A.

The liquid reservoir 41A stores a preservation solution before supplied to the organ X. The liquid reservoir 41A according to the present embodiment is a pouch bag (so-called drip bag) for storing the preservation solution. Note that the liquid reservoir 41A may be in any other form such as a so-called tank or bottle as long as it is a container capable of storing a preservation solution. The liquid reservoir 41Ais held by a bag holder 45A at a position higher than the organ X contained in the organ preservation container 1A.

The supplying tube 42A is a tube for suppling the preservation solution from the liquid reservoir 41A to the organ X contained in the organ preservation container 1A. One end of the supplying tube 42A is connected to the liquid reservoir 41A. The other end of the supplying tube 42A is connected to the outer end of the first connector 61A. This provides connection between the liquid reservoir 41A and the inflow blood vessel of the organ X via the supplying tube 42A, the first connector 61A, and the first catheter 65A. As a result, it is possible to supply the preservation solution from the liquid reservoir 41A to the organ X.

The supplying tube 42A has a so-called drip chamber 421A and an on-off valve 422A inserted therein. The on-off valve 422A opens and closes communication of a line of the supplying tube 42A. Note that the supplying tube 42A may not include the drip chamber 421A. Instead of the on-off valve 422A, a flow rate regulator (a roller clamp or a clamp) may be used for use in a general infusion device.

In the present embodiment, a supplying pump is not provided in the passage of the supplying tube 42A. A height difference between the liquid reservoir 41A and the organ X causes the preservation solution to flow from the liquid reservoir 41A into the organ X through the supplying tube 42A, the first connector 61A, and the first catheter 65A. In this way, the omission of a supplying pump simplifies the device configuration and reduces pressure load on the organ X resulting from the inflow of the preservation solution.

The drain tube 43A is a tube for discharging the liquid drained from the organ X to the outside of the organ preservation container 1A. One end of the drain tube 43A is connected to an outer end of the second connector 62A. The other end of the drain tube 43A is connected to the drainage collector 44A. Accordingly, a drainage blood vessel of the organ X is connected to the drainage collector 44A through a passage of the second catheter 66A, the second connector 62A, and the drain tube 43A. As a result, it is possible to collect the liquid drained from the organ X in the drainage collector 44A.

For example, the drainage collector 44A may be a simple drainage collection tank, and a drainage may be collected by a height difference from the organ X to the drainage collector 44A. The drainage collector 44A may include a drainage pump and a drainage collection tank and accelerate drainage from the organ X by using the drainage pump.

In the present embodiment, the liquid is collected from the drainage blood vessel of the organ X in the drainage collector 44A through the second catheter 66A, the second connector 62A, and the drain tube 43A. However, the liquid drained from the organ X into the organ preservation container 1A may be collected in the drainage collector 44A. Specifically, the other end of the second catheter 66A is not connected to the organ X and may be placed in the vicinity of the bottom of the storage 20A. In this case, the liquid drained from the organ X and stored in the storage 20A can be collected through the second catheter 66A, the second connector 62A, and the drain tube 43A in the drainage collector 44A.

Moreover, the second catheter 66A may be omitted without being connected to the second connector 62A. In that case, the liquid stored in the storage 20A flows from the second connector 62Ainto the drain tube 43A and is collected in the drainage collector 44A. In this case, the liquid can be drained through the second connector 62A when the liquid is stored up to the height of the second connector 62A in the storage 20A.

The pressure regulator 50A is placed outside the organ preservation container 1A and adjusts atmospheric pressure in the organ preservation container 1Ato a predetermined pressure lower than the atmospheric pressure. The pressure regulator 50A includes a pressure-reducing mechanism 51A, a pressure indicator 52A, and a controller 53A.

The pressure-reducing mechanism 51A according to the present embodiment includes an aspiration tube 511A, a pressure-reducing pump 512A, a regulator 513A, and an on-off valve 514A.

One end of the aspiration tube 511A is connected to an external end of the third connector 63A. Accordingly, one end of the aspiration tube 511A communicates to the internal space of the organ preservation container 1A. The other end of the aspiration tube 511A is connected to the pressure-reducing pump 512A. The regulator 513A and the on-off valve 514A are connected to the passage of the aspiration tube 511A.

The regulator 513A raises a negative pressure generated by the pressure-reducing pump 512A to a higher fixed negative pressure (a pressure with a small absolute value when expressed as gage pressure). The on-off valve 514A switches between the communicating state and closed state of the aspiration tube 511A. Instead of the pressure-reducing pump 512A, use strength provided for pressure reduction outside the organ preservation container 1A may be used.

When the pressure-reducing pump 512A is operated, gas is aspirated from the internal space of the organ preservation container 1A through the aspiration tube 511A and exhausted to the external space. As a result, atmospheric pressure in the organ preservation container 1A is reduced.

The pressure indicator 52A measures the pressure in the organ preservation container 1A. The pressure indicator 52Ais connected to the fourth connector 64A.

The controller 53A controls the pressure-reducing mechanism 51A in accordance with the measured value input from the pressure indicator 52. For example, the controller 53A may be configured as an electronic circuit board or a computer that includes a processor such as a CPU and memory such as RAM. The controller 53A is also electrically connected to the pressure indicator 52A and the pressure-reducing pump 512A, the regulator 513A, and the on-off valve 514A of the pressure-reducing mechanism 51A. The controller 53A controls operations of each components of the pressure-reducing mechanism 51A in accordance with the pressure in the organ preservation container 1A measured by the pressure indicator 52A in accordance with a preset program. Accordingly, atmospheric pressure in the organ preservation container 1A is regulated.

For example, the pressure regulator 50A maintains the pressure in the organ preservation container 1A at a negative pressure lower than or equal to -10 mmHg and higher than or equal to -50 mmHg from the atmospheric pressure. If the pressure in the organ preservation container 1A is maintained at a pressure lower than or equal to -10 mmHg from the atmospheric pressure, the blood vessels in the organ X are more likely to expand as compared to the case where the organ X is under atmospheric pressure. This reduces the pressure applied to the blood vessels when the liquid supplier 40A supplies the preservation solution to the blood vessels in the organ X. Accordingly, it is possible to smoothly supply the preservation solution to the blood vessels in the organ X while reducing the load on the organ X. If the pressure around the organ X becomes less than - 50 mmHg from the atmospheric pressure, edema of the organ X is more likely to occur. Thus, it is preferable that the pressure in the organ preservation container 1A is higher than or equal to -50 mmHg from the atmospheric pressure.

Note that the pressure regulator 50A may include a leak valve for fine adjustment of the pressure in the organ preservation container 1A. In that case, the organ preservation container 1A may further include another connector, and this connector may be connected to the leak valve.

As described above, the organ preservation container 1A according to the second embodiment includes the first connector 61A for connecting the tubes (the supplying tube 42A and the first catheter 65A) for supplying a liquid to the organ X from the inside and the outside. This facilitates the supply of the liquid to the organ X while the organ remains contained in the organ preservation container 1A. In particular, since the first connector 61A is placed in the storage 20A, the liquid can be suppled to the organ X irrespective of whether the lid 30A is attached to the storage 20A.

The organ preservation container 1A includes the second connector 62A for connecting the tubes (the drain tube 43A and the second catheter 66A) for discharging the liquid drained from the organ X to the outside of the organ preservation container 1A from the inside and the outside. This facilitates the collection of the liquid drained from the organ X while the organ X remains contained in the organ preservation container 1A. In particular, since the second connector 62A is placed in the storage 20A, the liquid drained from the organ X can be collected irrespective of whether the lid 30A is attached to the storage 20A.

The presence of the first connector 61A and the second connector 62Ain the organ preservation container 1A allows the supply of the preservation solution to the organ X and the collection of the liquid drained from the organ X in a state in which the lid 30A is attached to the storage 20A and the organ X remains contained in the enclosed space of the organ preservation container 1A.

The organ preservation container 1A further includes the third connector 63A and the fourth connector 64A that are connected to the pressure regulator 50A. This allows adjustment of the pressure in the organ preservation container 1A during preservation and transport of the organ X. Accordingly, it is possible to achieve perfusion preservation of the organ X under a desired pressure environment.

### 2-2. Process of Manufacturing Organ Preservation Container

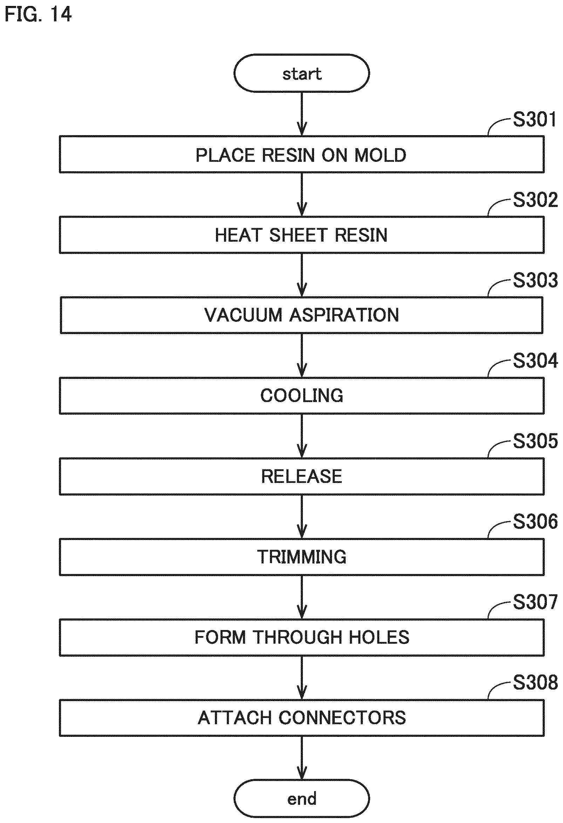

Next, the procedure for the process of manufacturing the organ preservation container 1A according to the second embodiment will be described with reference to Fig. 14. Fig. 14 is a flowchart showing the procedure for the process of manufacturing the storage 20A of the organ preservation container 1A. The process of manufacturing the lid 30A is almost the same as the process of manufacturing the storage 20A, and therefore a description thereof shall be omitted.

Steps S301 to S306 shown in Fig. 14 are the same as those in the process of manufacturing the organ preservation container 1 according to the first embodiment shown in Fig. 8. Through these steps, a member that has no through holes for attachment of the first connector 61A and the second connector 62A is produced, the member being equivalent to the storage 20 of the organ preservation container 1 according to the first embodiment. In the following description, the storage 20Ain this state before completion of manufacture is referred to as a yet-to-be-completed storage 20A.

Then, two through holes for attaching the first connector 61A and the second connector 62A are formed in the side wall 211A of the main body 21A of the yet-to-be-completed storage 20A (step S307). Then, the first connector 61A is attached to one of the formed through holes, and the second connector 62A is attached to the other through hole (step S308). Through the aforementioned steps, the storage 20A is formed.

In step S308, for example, in the case where the outer peripheral surfaces of the first connector 61A and the second connector 62A are formed of a material having hermeticity, the first connector 61A and the second connector 62A may be simply inserted into the through holes and attached to the main body 21A. Alternatively, a member having hermeticity may be inserted between the edges of the through holes and the outer peripheral surfaces of the first connector 61A and the second connector 62A. As another alternative, an adhesive having hermeticity may be used to fixedly attach the edges of the through holes and the outer peripheral surfaces of the first connector 61A and the second connector 62A.

Through the aforementioned process, the storage 20A is formed by vacuum forming. The lid 30A is also formed in the same manner. In this way, the connectors 61A to 64A are attached after the storage 20A and the lid 30A are formed by vacuum forming. This allows low-cost and large-volume production of the light-weight organ preservation container 1A including connectors. Accordingly, the load is small even if the organ preservation container 1A is used as a disposable container.

### 2-3. Procedure for Organ Transplant Operation

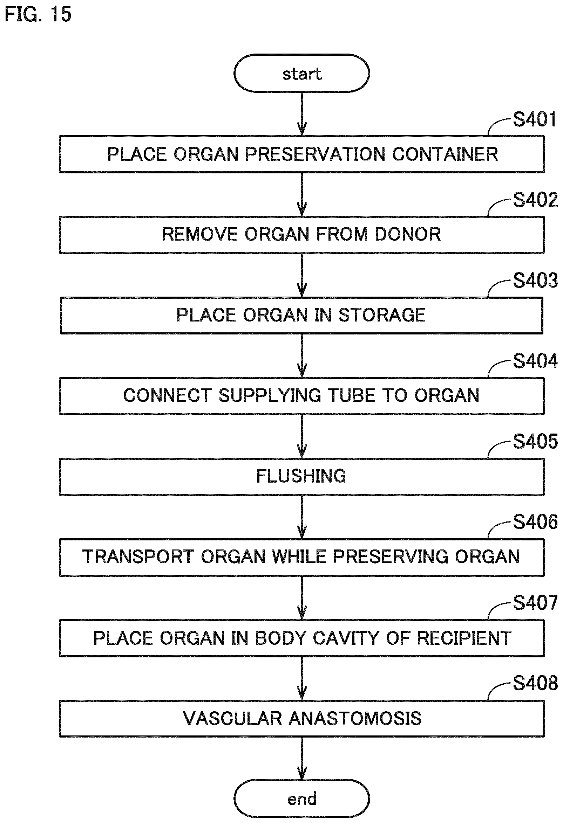

Then, the procedure for the organ transplant operation using the organ preservation container 1A according to the second embodiment will be described with reference to Fig. 15. Fig. 15 is a flowchart showing the procedure for the organ transplant operation according to the second embodiment. Note that a description of points that overlap with those in the description of the organ transplant operation according to the aforementioned first embodiment shall be omitted.

In the organ transplant operation, an operator prepares the organ preservation container 1A in advance. Specifically, the storage 20A of the organ preservation container 1A is placed around the site of operation of the donor (step S401).

Specifically, in advance, the first catheter 65Ais connected to the inner end of the first connector 61A, the second catheter 66A is connected to the inner end of the second connector 62A, the supplying tube 42A of the liquid supplier 40A is connected to the outer end of the first connector 61A, and the drain tube 43A is connected to the outer end of the second connector 62A. At this time, the on-off valve 422Ais closed to stop the supply of the preservation solution from the liquid reservoir 41A to the first catheter 65A.

When the preparation for the organ preservation container 1 has completed, an operator removes the organ X from the donor (step S402). Then, the operator holds and takes out the organ X from the body cavity of the donor with both hands and places the organ X in the storage 20 of the organ preservation container 1 (step S403).

Thereafter, the operator inserts the first catheter 65A serving as a supplying tube into an inflow blood vessel such as an artery of the organ X and inserts the second catheter 66A serving as a drain tube into a drainage blood vessel such as a vein of the organ X (step S404).

After each tube is connected to the organ, the operator performs flushing for cleaning the blood vessels in the organ X (step S205). Specifically, the operator releases the on-off valve 422A. Accordingly, the preservation solution is supplied from the liquid reservoir 41A to the organ X through the supplying tube 42A, the first connector 61A, and the first catheter 65A. When the preservation solution is supplied to the organ X, the liquid is circulated through the organ X and drained from the drainage blood vessel. That is, the liquid is drained from the organ X through the second catheter 66A, the second connector 62A, and the drain tube 43A and collected in the drainage collector 44A. Through this flushing, blood clots or waste products are washed away from the blood vessels in the organ X.

Then, the operator transports the organ X to the recipient while performing perfusion preservation of the organ X (step S406). In the perfusion preservation, the preservation solution continues to be supplied by the liquid supplier 40A, and the pressure regulator 50A regulates the pressure in the organ preservation container 1A. Specifically, first, the organ preservation container 1Ais sealed up by attaching the lid 30Ato the storage 20A, the storage 20A containing the organ X to which the preservation solution continues to be supplied from the liquid supplier 40A, the lid 30A being provided in advance with the third connector 63A and the fourth connector 64A connected to the pressure regulator 50A. Thereafter, the pressure regulator 50A is operated so as to adjust the pressure in the organ preservation container 1A. Then, the organ preservation container 1A is transported together with the liquid supplier 40A and the pressure regulator 50A.

When the organ preservation container 1A containing the organ X has arrived at the recipient, an operator takes out the organ X from the organ preservation container 1A and places the organ X in the body cavity of the recipient (step S407). Then, the operator anastomoses the artery of the organ X to an artery of the recipient and anastomoses the vein of the organ X to a vein of the recipient (step S408). Thereafter, the operator closes the abdomen of the recipient.

As described above, the use of the organ preservation container 1A makes it possible to handle the organ X within the organ preservation container 1A for a duration of time from immediately after the removal from the donor to immediately before the transplantation into the recipient through transport involving the flushing and the perfusion. Accordingly, it is possible to reduce the load on the organ X.

In the present embodiment, the organ preservation container 1A includes the first connector 61A for suppling the preservation solution to the organ X contained in the organ preservation container 1A from the outside of the organ preservation container 1A. Thus, it is possible to supply the preservation solution to the organ X contained in the organ preservation container 1A while maintaining the organ preservation container 1A in an enclosed state by attaching the lid 30A to the storage 20A. This enables performing perfusion preservation of the organ X even during transport of the organ X.

The organ preservation container 1A further includes the second connector 62A for discharging the liquid drained from the organ X in the organ preservation container 1A to the outside of the organ preservation container 1. Thus, it is possible to discharge the liquid drained from the organ X to the outside of the organ preservation container 1A while maintaining the organ preservation container 1A in an enclosed state by attaching the lid 30A to the storage 20A. Liquid drainage is an absolute necessity for long-duration perfusion preservation. The provision of the second connector 62A enables performing long-duration perfusion preservation of the organ X even during transport of the organ X.

The organ preservation container 1A further includes the third connector 63A and the fourth connector 64A for connecting the pressure regulator 50A for regulating the pressure in the organ preservation container 1A. Thus, it is possible to adjust the pressure in the organ preservation container 1A while maintaining the organ preservation container 1A in an enclosed state by attaching the lid 30A to the storage 20A.

### 3. Variations

While embodiments of the present invention have been described thus far, the present invention is not intended to be limited to the aforementioned embodiments.

In the aforementioned second embodiment, the organ preservation container includes the connectors capable of attaching tubes from the inside and outside of the organ preservation container. Alternatively, the organ preservation container may include through holes that are capable of inserting tubes without any clearance, instead of the connectors. Even in that case, it is possible to supply a liquid to the organ contained in the organ preservation container through these through holes from the outside of the organ preservation container or to discharge the liquid drained from the organ contained in the organ preservation container through the through holes to the outside. That is, perfusion can be performed on the organ contained in the organ preservation container. The organ preservation container may further include through holes for connecting the pressure regulating mechanism for regulating the internal pressure in the organ preservation container.

In the aforementioned second embodiment, the organ preservation container includes the four connectors including the first connector connected to the liquid supplier, the second connector connected to the drainage collector, and the third and fourth connectors connected to the pressure regulator, but the present invention is not limited to this example. The organ preservation container may include only the first connector connected to the liquid supplier, or may include only two connectors including the first connector and the second connector connected to the drainage collector. As another alternative, the organ preservation container may include only the third connector connected to the pressure-reducing mechanism as a connector connected to the pressure regulator.

In the aforementioned embodiments, the organ preservation container 1 has a circular shape when viewed from above, but the present invention is not limited to this example. The organ preservation container may have any other shape such as an elliptical shape or a rectangular shape when viewed from above.

Each element in the above-described embodiments and variations may be combined appropriately within a range that presents no contradictions.

### [Reference Signs List]

- 1, 1A: organ preservation container
- 8: mold
- 20, 20A: storage
- 21, 21A: main body
- 22: first edge portion
- 30, 30A: lid
- 31, 31A: cover portion
- 32: second edge portion
- 40A: liquid supplier
- 44A: drainage collector
- 50A: pressure regulator
- 61A: first connector
- 62A: second connector
- 63A: third connector
- 64A: fourth connector
- 100A: organ preservation device
- 200: protrusion
- 210: upper edge
- 221: first ring-shaped portion
- 222: first cylindrical portion
- 223: second ring-shaped portion
- 321: third ring-shaped portion
- 322: second cylindrical portion
- 323: fourth ring-shaped portion
- X: organ

## Claims

1. An organ preservation container for preserving an organ ex vivo, the organ preservation container comprising:
a storage including a main body recessed downward; and
a lid that covers an opening at a top of the main body,
wherein the storage and the lid are each formed by vacuum forming.

2. The organ preservation container according to claim 1, wherein
the storage includes:
the main body recessed downward from a ring-shaped upper edge; and
a first edge portion provided around the upper edge,
the lid includes:
a cover portion that covers an opening at the top of the main body; and
a second edge portion provided around the cover portion, and
the first edge portion and the second edge portion are fittable to each other.

3. The organ preservation container according to claim 2, wherein
the first edge portion includes:
a first ring-shaped portion expanding radially outward from the upper edge of the main body;
a first cylindrical portion extending upward from an outer peripheral edge of the first ring-shaped portion; and
a second ring-shaped portion expanding radially outward from an upper end of the first cylindrical portion,
the second edge portion includes:
a third ring-shaped portion expanding radially;
a second cylindrical portion extending upward from an outer peripheral edge of the third ring-shaped portion; and
a fourth ring-shaped portion expanding radially outward from an upper end of the second cylindrical portion, and
when the first edge portion and the second edge portion are fitted to each other, a ring-shaped contact surface is formed by at least one set of opposite surfaces from among:
a set of an upper surface of the first ring-shaped portion and a lower surface of the third ring-shaped portion;
a set of an inner peripheral surface of the first cylindrical portion and an outer peripheral surface of the second cylindrical portion; and
a set of an upper surface of the second ring-shaped portion and a lower surface of the fourth ring-shaped portion.

4. The organ preservation container according to any one of claims 1 to 3, wherein each part of the storage and the lid has a plate-like shape having a thickness of less than or equal to 5 mm.

5. The organ preservation container according to any one of claims 1 to 4, wherein the storage has a lower surface having a plurality of protrusions.

6. The organ preservation container according to any one of claims 1 to 5, further comprising:
at least one connector attached to either the storage or the lid, the connector providing communication between inside and outside of the organ preservation container.

7. An organ preservation device for preserving an organ ex vivo, the organ preservation device comprising:
the organ preservation container according to claim 6; and
a liquid supplier that supplies a liquid to the organ,
wherein the connector includes a first connector whose outer end is connected to the liquid supplier and whose inner end is connected to a catheter.

8. The organ preservation device according to claim 7, further comprising:
a drainage collector that collects a liquid drained from the organ,
wherein the organ preservation container includes a plurality of the connectors, and
the connectors include a second connector whose outer end is connected to the drainage collector.

9. An organ preservation device for preserving an organ ex vivo, the organ preservation device comprising:
the organ preservation container according to claim 6; and
a pressure regulator that regulates a pressure in the organ preservation container at a pressure lower than atmospheric pressure, and
the connector includes a third connector that is connected to the pressure regulator.

10. A method of manufacturing an organ preservation container for preserving an organ ex vivo,
the organ preservation container comprising:
a storage including a main body recessed downward; and
a lid that covers an opening at a top of the main body,
a process of manufacturing the storage and a process of manufacturing the lid each including the steps of:
a) heating and plasticizing a sheet resin;
b) placing the resin plasticized on a mold and molding the resin by vacuum aspiration from inside the mold;
c) cooling and hardening the resin;
d) releasing the resin from the mold; and
e) trimming the resin.

11. The method of manufacturing an organ preservation container according to claim 10, wherein
in the process of manufacturing the storage, a surface that is in contact with the mold becomes a lower surface of the storage.
